# FASCICULE DE BREVET EUROPEEN

(11) **EP 1 713 087 B1**
(45) Date de publication et mention de la délivrance du brevet: **19.05.2010**
(21) Numéro de dépôt: 06290360.4
(22) Date de dépôt: 02.03.2006
(51) Int. Cl.: G21C 17/00, G01B 11/24, G01N 21/88, G21C 17/017

(54) **Procédé et dispositif de contrôle et de mesure visuels à distance d'un alésage et ensemble de contrôle et de mesure visuels d'alésages tels que des guidages d'un tube-guide d'un réacteur nucléaire à eau sous pression**
Verfahren und Vorrichtung zur visuellen Fernüberwachung und Fernmessung einer Bohrung und Anordnung zur visuellen Überwachung und Messung von Bohrungen wie den Führungen eines Führungsrohrs eines Druckwasserkernreaktors
Method and device for remote visual controlling and measuring of an inner bore, and unit for visual control and measurement of inner bores in the form of guides of a nuclear pressure water reactor guide tube

(30) Priorité: 13.04.2005 FR 0503696
(43) Date de publication de la demande: 18.10.2006
(73) Titulaire: Areva NP, 92400 Courbevoie (FR)
(72) Inventeur: Ferlay, Jean-Claude, 71880 Chatenoy Le Royal (FR); Millet, Jean-Uldéric, 71880 Chatenoy Le Royal (FR); Blocquel, Alain, 69570 Dardilly (FR)
(74) Mandataire: Lanceplaine, Jean-Claude

(56) Documents cités:
- EP-A- 0 390 637
- EP-A- 0 655 747
- WO-A-01/92852
- FR-A- 2 601 779
- US-A- 5 078 955
- US-A1- 2003 206 607
- PATENT ABSTRACTS OF JAPAN vol. 2000, no. 12, 3 janvier 2001 (2001-01-03) & JP 2000 258141 A (HITACHI LTD), 22 septembre 2000 (2000-09-22)
- PATENT ABSTRACTS OF JAPAN vol. 009, no. 243 (P-392), 30 septembre 1985 (1985-09-30) & JP 60 097313 A (FUJITSU KK), 31 mai 1985 (1985-05-31)

## Description

La présente invention concerne un procédé et un dispositif de contrôle et de mesure visuels à distance d'un alésage.

L'invention concerne également un ensemble de contrôle et de mesure visuels à distance d'alésages de guidage d'un tube-guide des équipements internes supérieurs d'un réacteur nucléaire à eau sous pression.

De nombreuses industries ou installations utilisent des équipements qui comportent des alésages ou des tubes de guidage d'éléments destinés à se déplacer par coulissement dans ces alésages ou dans ces tubes.

Après un certain temps d'utilisation, il peut se produire une usure se traduisant par exemple par une déformation ou par une ovalisation des alésages ou de la paroi interne des tubes si bien que le guidage n'est plus assuré de manière tout à fait satisfaisante.

C'est le cas notamment des tubes-guides des équipements internes supérieurs des réacteurs nucléaires à eau sous pression, qui permettent d'assurer le guidage des barres de commande constituées par des faisceaux de crayons placés parallèlement les uns aux autres et renfermant un matériau absorbant les neutrons.

En effet, les tubes-guides des équipements internes supérieurs comportent des éléments de guidage discontinus constitués par des plaques planes appelées également cartes de guidage, percées d'ouvertures et des moyens de guidage continus constitués par des fourreaux et des tubes fendus placés dans la direction verticale du tube-guide, les alésages des plaques et les alésages des moyens de guidage continus se trouvant dans des positions correspondant aux positions des crayons absorbants dans le faisceau de la barre de commande.

Les alésages traversant les plaques de guidage et les fourreaux ainsi que les tubes fendus constituant des éléments de guidage des crayons absorbants, présentent des ouvertures latérales les mettant en communication avec un espace libre ménagé à la partie centrale du tube-guide et permettant le passage d'un pommeau d'assemblage de la grappe de crayons absorbants parallèles.

Pour assurer la commande du réacteur par réglage de la réactivité du coeur, les grappes de crayons absorbants sont déplacées dans la direction verticale, pendant le fonctionnement du réacteur, de manière que les crayons absorbants soient introduits sur une hauteur plus ou moins importante à l'intérieur de certains assemblages du coeur. Au cours de leur déplacement dans la direction verticale, les crayons absorbants des barres de commande sont guidés chacun par une série d'alésages alignés des plaques de guidage et d'un fourreau de guidage ou d'un tube fendu.

Mais, après un certain temps de fonctionnement du réacteur nucléaire, les alésages peuvent présenter une usure se traduisant par exemple par une ovalisation de la section de l'alésage, si bien que le guidage des crayons absorbants n'est plus réalisé de manière satisfaisante.

De ce fait, il est nécessaire d'effectuer des mesures et des contrôles périodiques sur les éléments de guidage des équipements internes supérieurs du réacteur nucléaire, pour déterminer si certains de ces éléments de guidage doivent être remplacés ou réparés.

Pour effectuer le contrôle des éléments de guidage, il est nécessaire de réaliser des mesures extrêmement précises sur ces éléments, dans la mesure où l'usure desdits éléments de guidage nécessitant une réparation ou un remplacement, se traduit par des différences faibles entre les dimensions des alésages des éléments de guidage dans différentes directions transversales. Ce contrôle doit être effectué pendant une période d'arrêt du réacteur nucléaire au cours de laquelle les équipements internes supérieurs sont extraits de la cuve et disposés dans le fond de la piscine du stand de stockage et d'intervention.

On connaît dans le document EP-A-0 390 637, un dispositif qui permet d'effectuer ces contrôles à partir de mesures comparatives de capacité de condensateurs constitués par des armatures réparties autour de l'axe d'un capteur qui est déplacé de manière sensiblement coaxiale à l'intérieur des éléments de guidage. De préférence, ce dispositif peut être réalisé sous la forme d'une grappe analogue à une grappe de commande qui peut être déplacée à l'intérieur d'un tube-guide. Les crayons absorbants de la grappe de commande sont remplacés par des barres cylindriques de direction axiale en deux parties entre lesquelles est intercalé une sonde de mesure constituée par des armatures de condensateurs réparties autour de l'axe de la sonde.

Mais, dans certains cas, la précision du contrôle obtenue en utilisant des sondes à mesure de capacité peut être insuffisante et le traitement des mesures peut représenter certaines difficultés.

On connaît également dans le FR-A-2 713 010, un dispositif de contrôle comportant une grappe de contrôle ayant un pommeau d'accrochage, des éléments de support de sonde de contrôle susceptibles d'être déplacés dans la direction axiale à l'intérieur des éléments de guidage du tube-guide, des sondes montées mobiles en rotation chacune sur un support autour d'un axe parallèle à l'axe du tube et des moyens de mise en rotation des sondes. La grappe de contrôle comporte un corps cylindrique dont le diamètre est inférieur au diamètre de l'alésage central du tube-guide et des bras de direction radiale, fixés autour du corps cylindrique dans des positions angulaires et axiales déterminées portant chacun une sonde de mesure rotative par leur partie opposée au corps cylindrique.

Un tel dispositif comportant des sondes rotatives est complexe quant à sa réalisation et à son utilisation.

L'invention a donc pour but de proposer un procédé et un dispositif de contrôle et de mesure visuels à distance d'un alésage qui permet, par des moyens simples, de mesurer de manière précise les dimensions d'un alésage et par conséquent son usure.

L'invention a donc pour objet un procédé de contrôle et de mesure visuels à distance d'un alésage, selon la revendication 1.

Selon d'autres caractéristiques de l'invention :
- on déplace suivant l'axe longitudinal de l'alésage l'éclairage circonférentiel simultanément à la caméra et on enregistre les images successives de la paroi interne éclairée, et
- on mesure simultanément ou postérieurement à l'enregistrement de ladite au moins image de la paroi interne éclairée, les dimensions intérieures de l'alésage en référence aux dimensions du masque placé dans le champ visuel de la caméra.

L'invention a également pour objet un dispositif de contrôle et de mesure visuels à distance d'un alésage, selon la revendication 4.

Selon d'autres caractéristiques de l'invention :
- la source lumineuse est formée par une lampe à incandescence, par une diode électroluminescente ou par un laser plan, dans un spectre visible ou infrarouge,
- le masque présente la forme d'un disque, d'un cône ou d'un tronc de cône dont la pointe ou la plus petite base est placée en regard de la caméra, et
- le dispositif comporte un moyen de déplacement suivant l'axe longitudinal de l'alésage de l'ensemble d'éclairage circonférentiel et de la caméra.

L'invention a aussi pour objet un ensemble de contrôle et de mesure visuels à distance d'alésages alignés selon une pluralité de directions axiales verticales, caractérisé en ce qu'il comporte un moyen de déplacement vertical dans la direction axiale du tube-guide d'une tige portant radialement au moins un dispositif de contrôle et de mesure visuels tel que précédemment mentionné.

De préférence, l'ensemble comporte un nombre de dispositifs de contrôle et de mesure visuels égal au nombre d'alésages de guidage du tube-guide pour effectuer simultanément le contrôle de l'ensemble des alésages de guidage de ce tube-guide.

D'autres caractéristiques et avantages de l'invention apparaîtront à la lecture de la description qui va suivre, donnée à titre d'exemple et faite en référence aux dessins annexés, sur lesquels:
- la Fig. 1 est une vue schématique en coupe longitudinale d'un tube fermé muni d'un dispositif de contrôle et de mesure visuels du profil interne de l'alésage de ce tube,
- la Fig. 2 est une vue schématique en coupe longitudinale d'un tube fendu équipé d'un dispositif de contrôle et de mesure visuels de l'alésage de ce tube fendu,
- les Figs. 3A et 3B représentent des images du profil interne du tube obtenues par le dispositif de contrôle et de mesure conforme à l'invention, respectivement pour un alésage circulaire et pour un alésage présentant une ovalisation,
- la Fig. 4 est une vue schématique en élévation d'un tube-guide des équipements internes supérieurs d'un réacteur nucléaire,
- la Fig. 5 est une vue en plan d'une plaque de guidage du tube-guide représenté à la Fig. 4,
- la Fig. 6 est une vue en coupe transversale des éléments de guidage continus du tube-guide représenté sur la Fig. 4,
- la Fig. 7 est une vue schématique en perspective et partiellement en coupe longitudinale d'un tube-guide équipé d'un ensemble de contrôle et mesure visuels à distance des alésages de guidage de ce tube-guide, et
- la Fig. 8 est une vue schématique en perspective d'un autre mode de réalisation d'un ensemble de contrôle et de mesure visuels à distance des alésages de guidage du tube-guide.

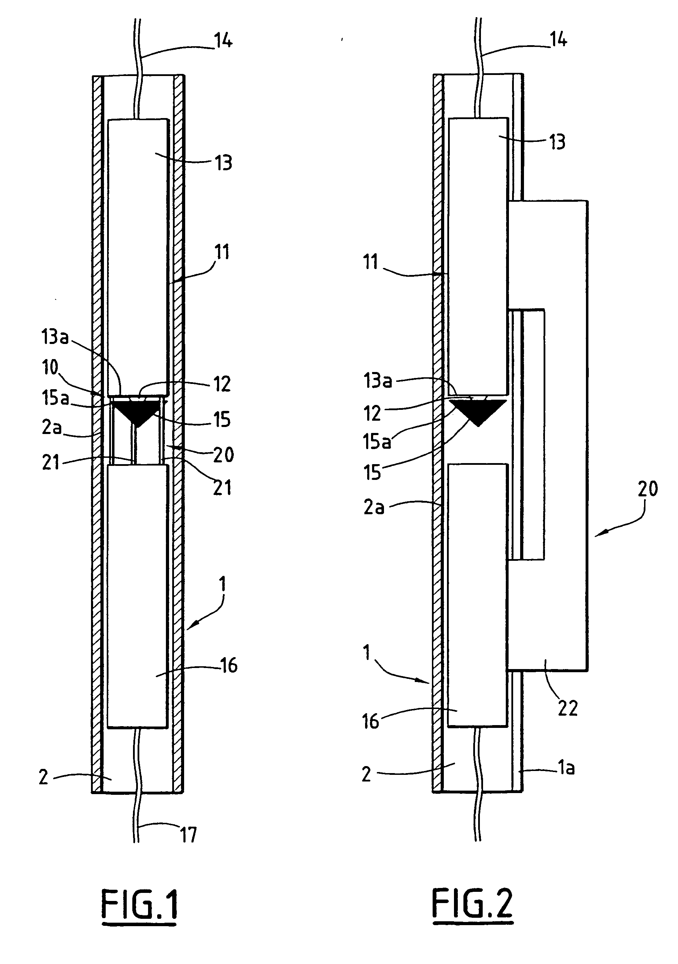

Sur la Fig. 1, on a représenté schématiquement un tube 1 qui présente une section fermée et qui comporte un alésage longitudinal 2.

Pour effectuer le contrôle et la mesure de l'alésage 2 du tube 1, un dispositif désigné par la référence générale 10 est placé à l'intérieur de cet alésage 2 de façon à mesurer le profil interne dudit alésage 2 suivant une coupe perpendiculaire à son axe longitudinal.

Le dispositif 10 se compose d'un ensemble 11 d'éclairage circonférentiel de la paroi interne 2a de l'alésage 2 comportant une source lumineuse 12 portée par un support 13. De manière classique, la source lumineuse 12 est reliée par un câble 14 à une alimentation électrique, non représentée.

La source lumineuse 12 est formée par exemple par une lampe à incandescence, par une diode électroluminescente ou par un laser plan, dans un spectre visible ou infrarouge ou par tout autre organe approprié.

Le dispositif de contrôle et de mesure 10 comprend également un masque 15 placé en regard et au plus près de la source lumineuse 12, ainsi que montré à la Fig. 1. La forme et les dimensions du masque 15 correspondent sensiblement à la forme et aux dimensions de l'alésage 2 à contrôler et à mesurer. Ce masque 15 présente la forme d'un cône, comme montré sur la Fig. 1, ou la forme d'un tronc de cône ou encore la forme d'un disque de faible épaisseur.

Dans le cas d'un masque 15 ayant la forme d'un cône ou d'un tronc de cône, la base du cône ou la plus grande base du tronc de cône est placée en regard de la face 13a du support 13 sur laquelle débouche la source lumineuse 12.

Cette source lumineuse 12 est située au plus près de la face 15a en vis à vis du masque 15 de façon à produire un faisceau le plus parallèle à cette face.

La face 13a du support 13 et la face 15a du masque 15 sont disposées de telle manière qu'il existe entre ces deux faces un jeu générant une sorte de "plan lumière" venant éclairer la paroi interne 2a de l'alésage 2 et créant ainsi un éclairage circonférentiel mettant en valeur le profil de l'intérieur de cet alésage 2.

Le dispositif 10 comporte aussi une caméra 16 reliée par un câble 17 à un système de visualisation des images de la paroi interne 2a de l'alésage 2 du tube 1. Cette caméra 16 est montée coaxialement en vis à vis du masque 15 et est maintenue à une distance fixe de ce masque 15 par des moyens de liaison mécanique reliant l'ensemble d'éclairage 11 et la caméra 16. Ces moyens de liaison sont désignés par la référence générale 20.

La caméra 16 est placée en regard de la pointe du masque 15 ou de la plus petite base dans le cas d'un masque 15 en forme de tronc de cône.

La caméra 16 est montée coaxialement en vis à vis du masque 15 et de la source lumineuse 12 et est maintenue à une distance fixe dudit masque 15. Le champ visuel de la caméra 16 est dirigé vers l'éclairage circonférentiel créé par la source lumineuse 12 et le masque 15 et l'axe optique de ladite caméra 16 est sensiblement centré sur l'axe longitudinal de l'alésage 2 du tube 1. Enfin, la profondeur de champ de la caméra 16 est réglée de façon à intégrer le masque 15 et la zone éclairée de la paroi interne 2a de l'alésage 2.

Dans l'exemple de réalisation représenté à la Fig. 1, les moyens de liaison 20 reliant mécaniquement le support 13 de l'ensemble 11 d'éclairage circonférentiel et la caméra 16 sont formés par des tiges de liaison 21 s'étendant parallèlement les unes aux autres.

Selon une variante, les moyens de liaison 20 peuvent être constitués par un tube axial, non représenté, reliant le masque 15 et la caméra 16.

Selon une autre variante représentée à la Fig. 2, qui s'applique plus particulièrement à un tube 1 fendu longitudinalement, les moyens de liaison 20 sont constitués par une équerre 22 reliant mécaniquement le support 13 et la caméra 16 et traversant la fente longitudinale 1 a du tube 1. Sur cette figure, les éléments communs au précédent mode de réalisation représenté à la Fig. 1, ont été désignés par les mêmes références.

Le masque 15 permet, d'une part, de produire un éclairage circonférentiel qui éclaire la paroi interne 2a de l'alésage 2 et, d'autre part, sert au calibrage du champ visuel de la caméra 16 du fait qu'il possède des dimensions connues servant de référence et qu'il est toujours dans le champ de cette caméra 16.

Le dispositif de contrôle et de mesure visuels 10 peut être utilisé pour effectuer une simple mesure en créant un éclairage circonférentiel d'une zone déterminée de la paroi interne 2a de l'alésage 2 du tube 1. L'image de la paroi interne 2a éclairée par l'éclairage circonférentiel en utilisant la différence de contraste sur la limite existant entre la zone éclairée et la zone non éclairée, est enregistrée par la caméra 16 et visualisée sur un système de visualisation de type classique.

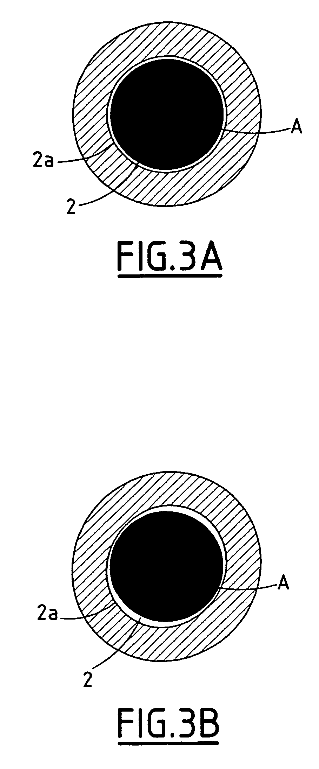

Deux images obtenues sont représentées sur les Figs. 3A et 3B.

Sur ces figures, la zone obscurcie par le masque 15 est désignée par A. Cette zone A présente un contour extérieur parfaitement circulaire.

Sur la Fig. 3A, on voit que la paroi interne 2a de l'alésage 2, dans la zone éclairée par l'éclairage circonférentiel et visualisée, est parfaitement concentrique au contour de la zone A. Ainsi, l'opérateur peut, par mesure comparative avec le diamètre du masque 15, en déduire que, dans cette zone, la paroi interne 2a n'a subi aucune déformation et que l'usure de la paroi interne 2a dans cette zone est uniforme.

Par contre, sur la Fig. 3B, la zone de la paroi interne 2a de l'alésage 2 éclairée par l'éclairage circonférentiel et visualisée montre une ovalisation de la paroi interne 2a dans cette zone. Les dimensions du masque étant connues, la déformation peut être déterminée et quantifiée.

Le dispositif de contrôle et de mesure visuels 10 est déplaçable suivant l'axe longitudinal de l'alésage 2 du tube 1 par des moyens de déplacement appropriés. Dans ce cas, les images successives de la paroi interne 2a de l'alésage 2 sont enregistrées et simultanément ou postérieurement à l'enregistrement de ces images, les dimensions intérieures de l'alésage 2 sont mesurées en se référant aux dimensions du masque 15 placé dans le champ visuel de la caméra 16.

Le dispositif 10 peut être mis en oeuvre manuellement ou de façon automatique, en air ou sous eau et selon le cas de figure, les réglages de la caméra 16 sont adaptés pour prendre en compte l'indice de réfraction et la variation du champ optique.

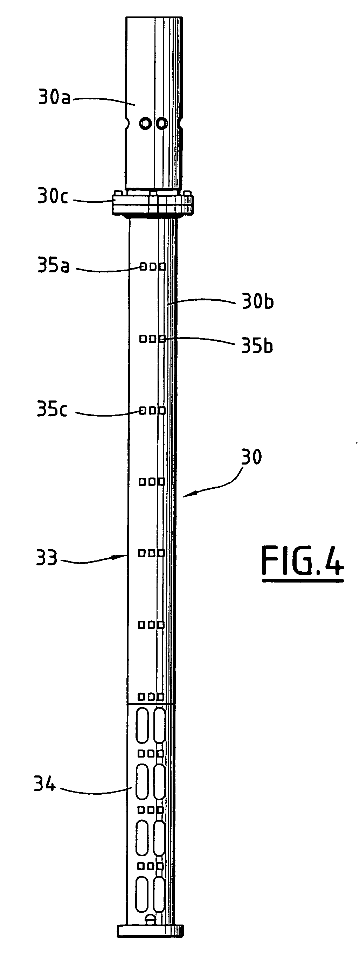

En se reportant maintenant aux Figs. 4 à 8, on va décrire une application du dispositif 10 pour le contrôle et la mesure visuels à distance des alésages de guidage d'un tube-guide des équipements internes supérieurs d'un réacteur à eau sous pression.

De manière classique, les équipements internes supérieurs d'un réacteur nucléaire comportent un ensemble de tubes-guides 30 reliés à une plaque supérieure, non représentée, et à une plaque inférieure, non représentée, et comportant chacun une partie supérieure 30a fixée au-dessus de la plaque supérieure et une partie inférieure 30b intercalée entre la plaque supérieure et la plaque inférieure.

Les parties, respectivement supérieure 30a et inférieure 30b, sont reliées entre elles par des moyens d'assemblage 30c comportant des brides rapportées l'une sur l'autre et fixées par des vis. Ces deux parties 30a et 30b du tube-guide 30 comportent une enveloppe externe cylindrique qui est percée d'ouvertures et qui renferme des éléments de guidage.

La partie inférieure 30b qui constitue la partie principale de guidage du tube-guide 30, comporte elle-même une portion supérieure 33 constituant la partie de guidage discontinu et une portion inférieure 34 constituant la partie de guidage continu des barres de commande de la réactivité du coeur du réacteur nucléaire.

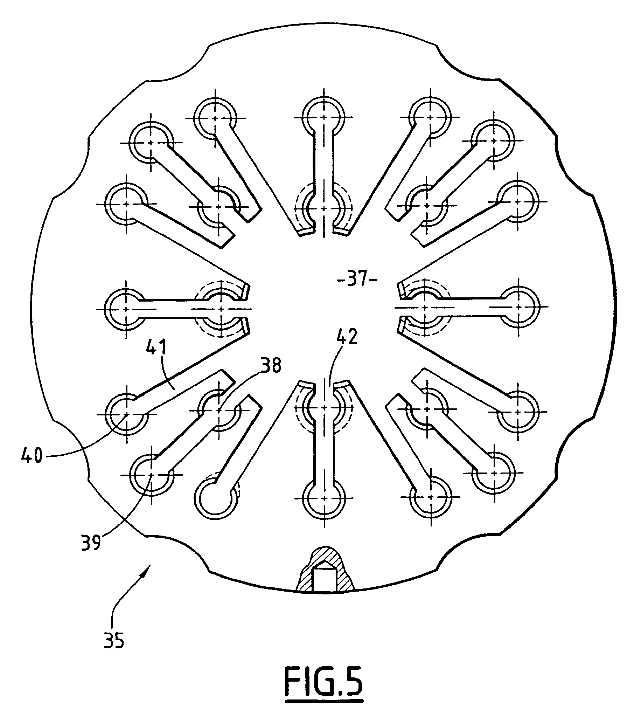

Dans la portion de guidage discontinu 33, l'enveloppe externe du tube-guide 30 renferme des plaques de guidage 35, également appelées carte de guidage, telles que représentées à la Fig. 5, dans des emplacements successifs 35a, 35b, 35c..., régulièrement espacés suivant la longueur axiale de la portion 33 de la partie inférieure 30b du tube-guide 30.

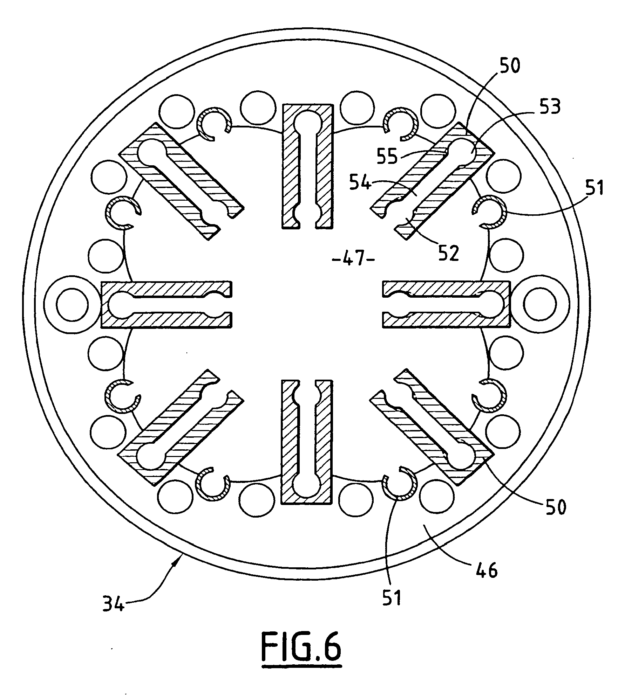

Suivant toute la longueur de la portion de guidage continu 34 de la partie inférieure 30b du tube-guide 30, sont disposés des éléments de guidage continu, tels que représentés à la Fig. 6.

Les plaques de guidage 35 discontinu ou cartes de guidage représentées à la Fig. 5, sont constituées par des plaques métalliques découpées de manière à ménager un espace libre 37 à la partie centrale de la plaque 35 et des alésages de guidage, tels que 38, 39 et 40 des crayons absorbants de la barre de commande correspondante qui peut être introduite et guidée dans le tube-guide renfermant les plaques de guidage 35. Les alésages tels que 40 sont disposés à l'extrémité d'une ouverture ou fente 41 traversant la plaque de guidage 35 et débouchant dans l'espace libre central 37. Les alésages, tels que 38 et 39 sont alignés suivant une ouverture ou fente 42 débouchant également dans l'espace libre central 37. Les ouvertures 41 et 42 sont de direction sensiblement radiale, c'est à dire perpendiculaires à la direction axiale du tube-guide 35. L'ensemble des alésages de guidage 38, 39 et 40 de la plaque de guidage 35 débouche dans l'espace libre central 37.

Après un certain temps de fonctionnement du réacteur nucléaire, les crayons absorbants des barres de commande du réacteur nucléaire sont venus en contact frottant avec les alésages des plaques de guidage 35 ce qui a provoqué une usure de ces alésages 38, 39 et 40.

Ainsi que montré à la Fig. 6, la portion de guidage continu 34 du tube-guide 30 comporte, à l'intérieur de l'enveloppe cylindrique de la partie 30b de ce tube-guide 30, un support 46 comportant un espace libre central 47 dans le prolongement de l'espace libre 37 des plaques de guidage 35. Les espaces libres 37 des plaques de guidage 35 et l'espace libre 47 du guidage continu 34 constituent l'alésage central du tube-guide 30.

Les éléments de guidage continu sont fixés sur le support 46 et sont constitués par des fourreaux de guidage 50 et des tubes fendus 51 disposés dans la direction axiale du tube-guide 30. Chacun des fourreaux de guidage 50 délimitent deux alésages de guidage 52 et 53 reliés entre eux par une fente 54 et débouchant dans l'espace libre 47. Les tubes fendus 51 portent une fente dirigée vers l'espace libre central 47. Les alésages de guidage 52 et 53 et les tubes fendus 51 communiquent donc tous avec l'alésage libre central 47 du tube-guide 30 par une ouverture latérale. Les alésages 51, 52 et 53 des parties de guidage continu sont disposés de manière à reproduire, en section transversale, le réseau des tubes-guides d'un assemblage du coeur d'un réacteur nucléaire dans lesquels sont introduits les crayons absorbants d'une barre de commande. En outre, les plaques de guidage 35 sont disposées parallèlement les unes aux autres dans des positions telles que les alésages des différents axes successifs soient alignés pour constituer des canaux de guidage de direction axiale. Les alésages 51, 52 et 53 du guidage continu 34 présentent également, après un certain temps de fonctionnement du réacteur nucléaire au cours duquel les crayons absorbants des barres de commande du réacteur nucléaire sont venus en contact frottant, des zones d'usure.

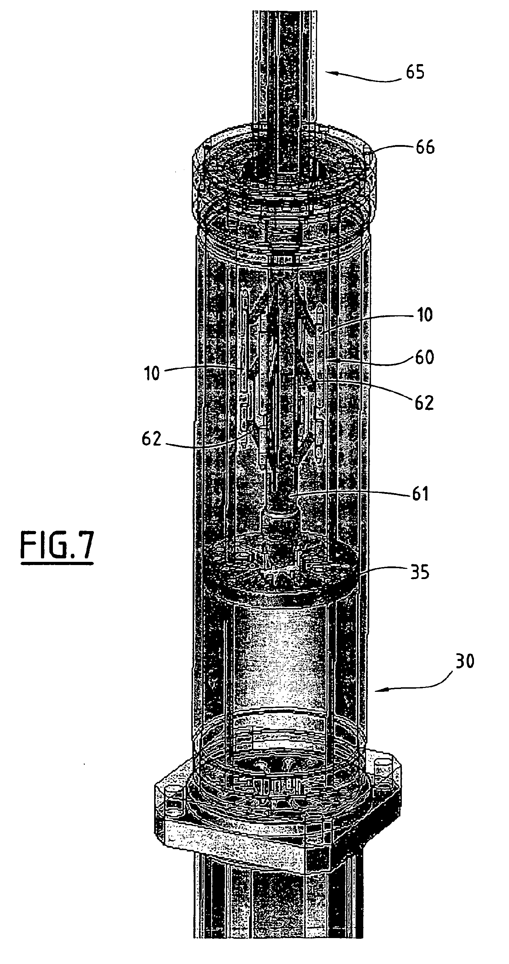

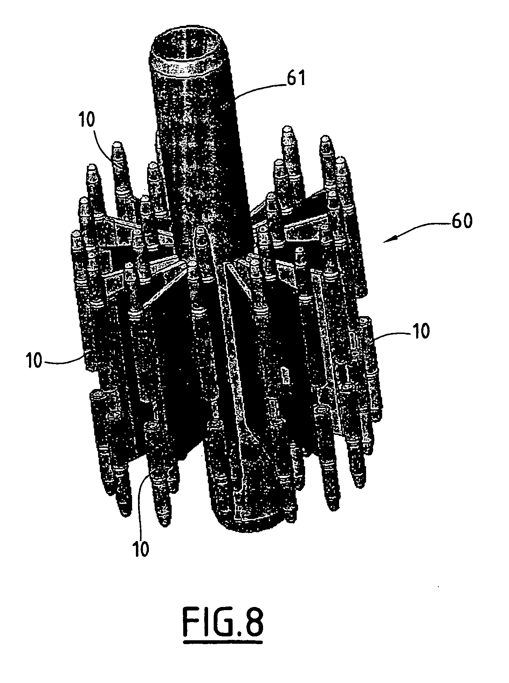

Le contrôle des alésages des plaques de guidage 35 et des alésages des supports 46 des éléments de guidage continu est réalisé à l'aide d'un ensemble désigné par la référence générale 60 et dont deux modes de réalisation sont représentés, à titre d'exemple sur les Fig. 7 et 8.

Dans le mode de réalisation représenté à la Fig. 7, l'ensemble 60 comprend une tige 61 destinée à traverser les espaces libres 37 et 47. Cette tige 61 peut être reliée à un moyen de déplacement vertical dans la direction axiale du tube-guide 30.

La tige 61 porte radialement au moins un dispositif 10 de contrôle et de mesure identique à celui décrit précédemment. Dans cet exemple de réalisation, la tige 60 porte quatre dispositifs 10 de contrôle et de mesure qui sont fixés chacun à l'extrémité de bras 62 déplaçables entre une première position dans laquelle les dispositifs 10 sont appliqués contre la tige 61 et une seconde position dans laquelle ces dispositifs 10 sont écartés de cette tige 61 en fonction de la position des alésages à contrôler. Dans la seconde position, les dispositifs 10 s'étendent parallèlement à la tige 61, c'est à dire parallèlement à l'axe longitudinal du tube-guide 30.

Les bras 62 portant chacun un dispositif 10 sont déplaçables par des moyens appropriés, comme par exemple un système vis-écrou.

Le moyen de déplacement de l'ensemble 60 à l'intérieur du tube-guide 30 est constitué par exemple par une perche 65 introduite par le dessus du tube-guide 30 à la place de la tige de commande des grappes de crayons absorbants et qui permet de déplacer cet ensemble 60 sur toute la hauteur du tube-guide 30 afin d'effectuer le contrôle et la mesure des alésages.

Dans l'exemple de réalisation représenté à la Fig. 7, l'orientation des dispositifs 10 selon la position des alésages à contrôler et à mesurer est assurée par exemple par un plateau de positionnement 66 bridé sur la partie supérieure du tube-guide 30. Ainsi, à chaque passage des dispositifs 10 dans les alésages, le profil interne des alésages contrôlés est enregistré, puis interprété de façon à déterminer si ces alésages ont subi une usure ou non.

Entre chaque passage, la position radiale et l'orientation des dispositifs 10 sont modifiées en fonction de la position des alésages à contrôler.

Selon une variante, l'ensemble 60 peut être amené par un porte-outils au-dessous des équipements internes supérieurs et centré en dessous du tube-guide 30 dont les alésages doivent être contrôlés et une perche venant en lieu et en place de la tige de commande est connectée à la tige 61 de l'ensemble 60 afin de déplacer verticalement et vers le haut l'ensemble 60 dans le tube-guide 30 pour assurer le contrôle et la mesure des alésages.

Selon un autre mode de réalisation représenté à la Fig. 8, la tige 61 de l'ensemble 60 porte radialement un nombre de dispositifs 10 de contrôle et de mesure visuels égal au nombre d'alésages de guidage du tube-guide 30 pour effectuer simultanément le contrôle de l'ensemble de guidage de ce tube-guide 30.

Les contrôles et les mesures peuvent être effectués à différentes hauteurs à l'intérieur des alésages de guidage continu ou de manière continue pendant le déplacement de l'ensemble 60.

Dans le cas de l'utilisation du dispositif 10 de contrôle et de mesure visuels, pour un alésage dans un tube à section fermée, le système peut être complété par un moyen de centrage pour maintenir la coaxialité avec le tube, comme par exemple par des brosses montées à la périphérie du dispositif.

L'invention s'applique notamment au contrôle des alésages de guidage de tubes-guides des équipements internes supérieurs de tout réacteur nucléaire à eau sous pression ou d'autres types de réacteurs comportant des tubes-guides présentant des alésages de guidage de barres de commande, rectilignes et généralement verticaux.

Le dispositif selon l'invention peut également servir à évaluer les déformations internes d'un tube de générateur de vapeur.

D'une manière générale, le dispositif selon l'invention s'applique au contrôle et à la mesure visuels des alésages de formes et de dimensions variées.

## Revendications

1. Procédé de contrôle et de mesure visuels à distance d'un alésage (2), **caractérisé en ce que** :
- on place en vis à vis à l'intérieur de l'alésage (2) une source lumineuse (12) et un masque (15) pour produire un faisceau parallèle à la face (15a) du masque (15), disposée en regard de ladite source lumineuse (12) et pour générer un plan lumière créant un éclairage circonférentiel de la paroi interne (2a) de l'alésage (2), ledit masque (15) ayant la forme et les dimensions correspondant sensiblement à la forme et aux dimensions de cet alésage (2), et
- on enregistre au moins une image de la parois interne (2a) éclairée par l'éclairage circonférentiel au moyen d'une caméra (16) disposée en vis à vis du masque (15) et dont le champ visuel est dirigé vers l'éclairage circonférentiel et dont l'axe optique est sensiblement centré sur l'axe longitudinal de l'alésage (2).

2. Procédé selon la revendication 1, **caractérisé en ce que** l'on déplace suivant l'axe longitudinal de l'alésage (2), l'éclairage circonférentiel simultanément à la caméra (16) et on enregistre les images successives de la paroi interne (2a) éclairée.

3. Procédé selon la revendication 1 ou 2, **caractérisé en ce que** l'on mesure simultanément ou postérieurement à l'enregistrement de ladite au moins image de la paroi (2a) interne éclairée, les dimensions intérieures de l'alésage (2) en référence aux dimensions du masque (15) placé dans le champ visuel de la caméra (16).

4. Dispositif (10) de contrôle et de mesure visuels à distance d'un alésage (2), **caractérisé en ce qu'**il comprend à l'intérieur de l'alésage (2) :
- un ensemble (11) comportant en vis à vis une source lumineuse (12) et un masque (15) pour produire un faisceau parallèle à la face (15a) du masque (15) disposée en regard de ladite source lumineuse (12) et pour générer un plan lumière créant un éclairage circonférentiel de la paroi interne (2a) de l'alésage (2), la forme et les dimensions dudit masque (15) correspondant sensiblement à la forme et aux dimensions de cet alésage (2),
- une caméra (16) d'enregistrement d'au moins une image de la paroi interne (2a) éclairée par l'éclairage circonférentiel et disposée en vis à vis du masque (15), le champ visuel de cette caméra (16) étant dirigé vers l'éclairage circonférentiel et l'axe optique de ladite caméra (16) étant sensiblement centré sur l'axe longitudinal de l'alésage (2), et
- des moyens (20) de liaison mécanique de l'ensemble (11) et de la caméra (16).

5. Dispositif selon la revendication 4, **caractérisé en ce que** la source lumineuse (12) est formée par une lampe à incandescence, par une diode électroluminescente ou par un laser plan, dans un spectre visible ou infrarouge.

6. Dispositif selon la revendication 4 ou 5, **caractérisé en ce que** le masque (15) présente la forme d'un disque, d'un cône ou d'un tronc de cône dont la pointe ou la plus petite base est placée en regard de la caméra (16).

7. Dispositif selon l'une quelconque des revendications 4 à 6, **caractérisé en ce qu'**il comporte un moyen de déplacement suivant l'axe longitudinal de l'alésage (2) de l'ensemble (11) d'éclairage circonférentiel et de la caméra (16).

8. Ensemble de contrôle et de mesure visuels à distance d'alésages (38, 39, 40 ; 51, 52, 53) alignés suivant une pluralité de directions axiales verticales, **caractérisé en ce qu'**il comporte un moyen de déplacement vertical dans la direction axiale, d'une tige (61) portant radialement au moins un dispositif (10) de contrôle et de mesure visuels selon l'une quelconque des revendications 4 à 6.

9. Ensemble selon la revendication 8, **caractérisé en ce qu'**il comporte un nombre de dispositifs (10) de contrôle et de mesure visuels égal au nombre d'alésages (38, 39, 40, 51, 52, 53) de guidage du tube-guide (30) pour effectuer simultanément le contrôle de l'ensemble desdits alésages de guidage du tube-guide (30).

## Claims

1. Method for the remote visual inspection and measurement of a bore (2), **characterised in that**:
- a light source (12) and a mask (15) are placed opposite one another in the interior of the bore (2) to produce a beam parallel to the face (15a) of the mask (15), arranged opposite said light source (12), and to generate a light plane creating circumferential illumination of the internal wall (2a) of the bore (2), said mask (15) having a shape and dimensions corresponding substantially to the shape and dimensions of this bore (2), and
- at least one image of the internal wall (2a) illuminated by the circumferential illumination is recorded by means of a camera (16) arranged opposite the mask (15) and of which the field of view is oriented towards the circumferential illumination and of which the optical axis is substantially centred on the longitudinal axis of the bore (2).

2. Method according to Claim 1, **characterised in that** the circumferential illumination is displaced along the longitudinal axis of the bore (2) at the same time as the camera (16) and the successive images of the illuminated internal wall (2a) are recorded.

3. Method according to Claim 1 or 2, **characterised in that** the internal dimensions of the bore (2) are measured simultaneously or subsequently to the recording of said at least one image of the illuminated internal wall (2a) with reference to the dimensions of the mask (15) placed in the field of view of the camera (16).

4. Device (10) for the remote visual inspection and measurement of a bore (2), **characterised in that** it comprises in the inside of the bore (2):
- an assembly (11) comprising a light source (12) and a mask (15) opposite one another to produce a beam parallel to the face (15a) of the mask (15) arranged opposite said light source (12) and to generate a light plane creating circumferential illumination of the internal wall (2a) of the bore (2), the shape and the dimensions of said mask (15) corresponding substantially to the shape and dimensions of this bore (2),
- a camera (16) for recording at least one image of the internal wall (2a) illuminated by the circumferential illumination and arranged opposite the mask (15), the field of view of this camera (16) being oriented towards the circumferential illumination and the optical axis of said camera (16) being substantially centred on the longitudinal axis of the bore (2), and
- means (20) for mechanically connecting the assembly (11) and the camera (16).

5. Device according to Claim 4, **characterised in that** the light source (12) is formed by an incandescent lamp, by an electroluminescent diode or by a laser beam in a visible or infrared spectrum.

6. Device according to Claim 4 or 5, **characterised in that** the mask (15) has the shape of a disc, a cone or truncated cone of which the point or the smallest base is placed opposite the camera (16).

7. Device according to any one of Claims 4 to 6, **characterised in that** it comprises a means for displacement along the longitudinal axis of the bore (2) of the circumferential illumination assembly (11) and of the camera (16).

8. Assembly for the remote visual inspection and measurement of bores (38, 39, 40; 51, 52, 53) aligned along a plurality of vertical axial directions, **characterised in that** it comprises a means for vertical displacement, in the axial direction, of a rod (61) carrying radially at least one device (10) for visual inspection and measurement, according to any one of Claims 4 to 6.

9. Assembly according to Claim 8, **characterised in that** it comprises a number of devices (10) for visual inspection and measurement equal to the number of guide bores (38, 39, 40, 51, 52, 53) of the guide tube (30) to carry out simultaneously the inspection of all of said guide bores of the guide tube (30).

## Patentansprüche

1. Verfahren zur visuellen Fernüberwachung und
- messung einer Bohrung (2), **dadurch gekennzeichnet, dass:**
- man im Inneren der Bohrung (2) in Gegenüberstellung eine Lichtquelle (12) und eine Maske (15) zum Erzeugen eines Strahlenbündels parallel zur Stirnfläche (15a) der Maske (15), die gegenüber der Lichtquelle (12) liegt, und zum Erzeugen einer Lichtebene, die eine Umfangsbeleuchtung der Innenwand (2a) der Bohrung (2) erzeugt, anordnet, wobei die Maske (15) die Form und die Abmessungen im Wesentlichen korrespondierend zu der Form und den Abmessungen dieser Bohrung (2) aufweist, und
- man mindestens ein Bild der durch die Umfangsbeleuchtung beleuchteten Innenwand (2a) mittels einer Kamera (16) aufnimmt, die gegenüber der Maske (15) angeordnet ist und deren Blickfeld zur Umfangsbeleuchtung gerichtet ist und deren optische Achse im Wesentlichen auf die Längsachse der Bohrung (2) zentriert ist.

2. Verfahren nach Anspruch 1, **dadurch gekennzeichnet, dass** man gemäß der Längsachse der Bohrung (2) die Umfangsbeleuchtung simultan zur Kamera (16) verschiebt und man die aufeinanderfolgenden Bilder der beleuchteten Innenwand (2a) aufnimmt.

3. Verfahren nach Anspruch 1 oder Anspruch 2, **dadurch gekennzeichnet, dass** man simultan mit oder nach der Aufnahme des mindestens einen Bildes der beleuchteten Innenwand (2a) die Innenabmessungen der Bohrung (2) in Bezug die Abmessungen der Maske (15) misst, die in dem Blickfeld der Kamera (16) angeordnet ist.

4. Vorrichtung (10) zur visuellen Fernüberwachung und -messung einer Bohrung (2), **dadurch gekennzeichnet, dass** sie im Inneren der Bohrung (2) umfasst:
- eine Anordnung (11), die in Gegenüberstellung eine Lichtquelle (12) und eine Maske (15) umfasst zur Erzeugung eines Strahlenbündels parallel zur Stirnfläche (15a) der Maske (15), die gegenüber der Lichtquelle (12) liegt, und zum Erzeugen einer Lichtebene, die eine Umfangsbeleuchtung der Innenwand (2a) der Bohrung (2) erzeugt, wobei die Form und die Abmessungen der Maske (15) im Wesentlichen der Form und der Abmessungen dieser Bohrung (2) entsprechen,
- eine Kamera (16) zur Aufnahme mindestens eines Bildes der durch die Umfangsbeleuchtung beleuchteten Innenwand (2a) und die gegenüberliegend zur Maske (15) angeordnet ist, wobei das Blickfeld dieser Kamera (16) zur Umfangsbeleuchtung gerichtet ist und die optische Achse der Kamera (16) im Wesentlichen auf die Längsachse der Bohrung (2) zentriert ist, und
- Mittel (20) zur mechanischen Verbindung der Anordnung (11) und der Kamera (16).

5. Vorrichtung nach Anspruch 4, **dadurch gekennzeichnet, dass** die Lichtquelle (12) durch eine Glühlampe, durch eine Elektrolumineszenzdiode oder durch einen flächigen Laser in einem sichtbaren oder Infrarotspektrum gebildet ist.

6. Vorrichtung nach Anspruch 4 oder Anspruch 5, **dadurch gekennzeichnet, dass** die Maske (15) die Form einer Scheibe, eines Kegels oder eines Kegelstumpfes aufweist, dessen Spitze oder dessen kleinste Grundfläche gegenüberliegend zur Kamera (16) angeordnet ist.

7. Vorrichtung nach einem beliebigen der Ansprüche 4 bis 6, **dadurch gekennzeichnet, dass** sie ein Mittel zur Verschiebung der Anordnung (11) zur Umfangsbeleuchtung und der Kamera (16) gemäß der Längsachse der Bohrung (2) aufweist.

8. Anordnung zur visuellen Fernüberwachung und
- messung von Bohrungen (38, 39, 40; 51, 52, 53), die gemäß einer Mehrzahl von vertikalen axialen Richtungen ausgerichtet sind, **dadurch gekennzeichnet, dass** sie ein Mittel zur vertikalen Verschiebung in der axialen Richtung einer Stange (61) umfasst, die radial mindestens eine Vorrichtung (10) zur visuellen Überwachung und Messung nach einem beliebigen der Ansprüche 4 bis 6 trägt.

9. Anordnung nach Anspruch 8, **dadurch gekennzeichnet, dass** sie eine Anzahl von Vorrichtungen (10) zur visuellen Überwachung und Messung gleich der Anzahl von Bohrungen (38, 39, 40, 51, 52, 53) zur Führung des Führungsrohr (30) aufweist, um gleichzeitig die Überwachung der Anordnung der Führungsbohrungen des Führungsrohres (30) durchzuführen.
